# EUROPÄISCHE PATENTSCHRIFT

(11) **EP 0 861 682 B1**
(45) Veröffentlichungstag und Bekanntmachung des Hinweises auf die Patenterteilung: **30.08.2000**
(21) Anmeldenummer: 98102868.1
(22) Anmeldetag: 19.02.1998
(51) Int. Cl.: B01D 35/30, B01D 35/01

(54) **Deckel für ein Filtergehäuse**
Cover for filter casing
Couvercle pour boîtier filtrant

(30) Priorität: 26.02.1997 DE 19707600
(43) Veröffentlichungstag der Anmeldung: 02.09.1998
(73) Patentinhaber: MAHLE Filtersysteme GmbH, 70376 Stuttgart (DE)
(72) Erfinder: Brieden, Thomas, 71336 Waiblingen (DE); Müller, Hubert, 70327 Stuttgart (DE)
(74) Vertreter: Patentanwalts-Partnerschaft Rotermund + Pfusch

(56) Entgegenhaltungen:
- DE-A- 4 428 771
- DE-C- 3 327 804

## Beschreibung

Die Erfindung betrifft einen Deckel für ein Filtergehäuse gemäß dem Oberbegriff des Anspruchs 1.

Die DE 33 27 804 C1 zeigt einen Verschluß für Filter mit zwei Gehäuseteilen, die sich wenigstens auf einem Teil ihrer axialen Länge umfassen und in diesem Bereich über einen Dichtring radial gegeneinander abgedichtet sind. Der Verschluß ist so ausgestaltet, daß bei versehentlichem Öffnen des Filters unter Druck zunächst nur eine geringe Flüssigkeitsmenge über einen Entlüftungskanal austreten kann, der die Räume innerhalb und außerhalb des Filtergehäuses miteinander verbindet und durch Zusammenschrauben eines gehäuseseitigen festen Gewindeträgers mit einem verdrehbar und axial am Gehäusedeckel festgelegten deckelseitigen Gewindeträger verschließbar ist. Beim Öffnen des Verschlusses wird zunächst die Gewindeträgerdichtung und nachfolgend erst der Dichtring zwischen den Gehäuseteilen unwirksam.

Filter für Flüssigkeiten, wie Öl oder Treibstoff, werden häufig annähernd aufrecht montiert, um eine Wartung des Filters, insbesondere einen Austausch der im Filtergehäuse angeordneten Filterelemente, ohne Flüssigkeitsverlust durchführen zu können. Dabei werden Deckel der eingangs genannten Art verwendet, um das Filtergehäuse von oben zu verschließen bzw. zu öffnen.

Üblicherweise enthalten die Flüssigkeitsfilter während ihres Betriebes nach Möglichkeit keine Luft und sind demnach im wesentlichen vollständig mit der betreffenden Flüssigkeit gefüllt. Beim Herausschrauben eines beispielsweise mit einem Gewinde als Befestigungsmittel versehenen Deckels wirkt seine Becherform wie der Kolben einer Pumpe und erzeugt im Gehäuseinneren einen Unterdruck. Aufgrund der Inkompressibilität von Flüssigkeiten wird dadurch weitere Flüssigkeit aus einem entsprechenden Tank in den Filtergehäuseinnenraum angesaugt, die jedoch wegen den normalerweise in einer entsprechenden Zuführungsleitung angeordneten Ventilmittel nicht in den Tank zurückfließen kann. Beim anschließenden Einschrauben des Deckels kann dann das Filtergehäuse überlaufen und/oder überschüssige Flüssigkeit wird unnötigerweise einem Verbraucher zugeführt, der dem Flüssigkeitsfilter nachgeschaltet ist. Darüber hinaus wird beim Aufsetzen des becherförmigen Deckels die in seiner Innenseite befindliche Luft eingeschlossen und beim Einschrauben des Deckels mit in den Gehäuseinnenraum eingebracht. Ein derartiges Luftpolster kann für den nachgeschalteten Verbraucher schädlich sein, zumindest aber die Effizienz des Filters erheblich senken.

Der Erfindung liegt demnach die Aufgabe zugrunde, einen Deckel der eingangs genannten Art anzugeben, der beim Abnehmen vom Filtergehäuse weniger Saugwirkung entfaltet und beim Aufsetzen auf das Filtergehäuse weniger Luft in den Filtergehäuseinnenraum einbringt.

Diese Aufgabe wird erfindungsgemäß durch einen Deckel mit den Merkmalen des Anspruchs 1 gelöst. Beim Herausnehmen des Deckels nach der Erfindung wird ein sich aufbauender Unterdruck sofort beseitigt, sobald die Dichtmittel ihre Dichtwirkung gegenüber dem Filtergehäuse nicht mehr entfalten können, wenn beispielsweise ein als Dichtmittel verwendeter O-Ring nicht mehr am Filtergehäuse abdichtend anliegt. Denn die Öffnung in der Seitenwand ermöglicht dann eine Kommunikation des Filtergehäuseinnenraumes mit der Umgebung und bewirkt so einen Druckausgleich. Bei der Verwendung eines Gewindes als Befestigungsmittel kann eine ungünstige Saugwirkung auch schon durch die Dichtwirkung des Gewindes selbst erzielt werden. Die Öffnung ist deshalb beim erfindungsgemäßen Deckel vorzugsweise zwischen Dichtmittel und Befestigungsmittel bzw. im oberen Bereich der Befestigungsmittel vorgesehen. Durch die frühzeitig bewirkte Beseitigung des Unterdruckes kann kaum zusätzliche Flüssigkeit angesaugt werden, zumindest wird die angesaugte Flüssigkeitsmenge gegenüber einem Deckel ohne eine derartige Belüftungsöffnung deutlich verringert. Beim Aufsetzen des erfindungsgemäßen Deckels bewirkt die Öffnung eine weitgehende Entlüftung der Deckelinnenseite, so daß dabei, wenn überhaupt, nur ein geringes Luftpolster in das Filtergehäuseinnere eingebracht wird.

Bei einer bevorzugten Ausführungsform des Deckels nach der Erfindung kann die Öffnung mit einer in der Seitenwand ausgesparten Ringnut kommunizieren, in die ein O-Ring als Dichtmittel eingebracht ist. Diese Maßnahme bewirkt einerseits, daß beim Herausnehmen des Deckels, unmittelbar nachdem der O-Ring nicht mehr abdichtend am Filtergehäuse anliegt, die Verbindung zwischen Gehäuseinnerem und Umgebung schon hergestellt ist. Andererseits kann dadurch beim Aufsetzen des Deckels der Gehäuseinnenraum länger entlüftet werden.

Um das Be- bzw. Entlüften des Deckelinnenraumes weiter zu verbessern kann gemäß einer Weiterbildung des Deckels nach der Erfindung in einer das offene Ende des Filtergehäuses bildenden Stirnseite wenigstens eine Aussparung vorgesehen sein, die an der Stirnseite beginnt, sich axial zur Längsachse des Filtergehäuses bzw. des Deckels erstreckt und bei montiertem Deckel oberhalb der Dichtmittel endet. Diese verbesserte Ausführungsform bewirkt ein noch frühzeitigeres Aufheben der Dichtwirkung der Dichtmittel und somit ein früheres Kommunizieren zwischen dem Gehäuseinnenraum und der Umgebung, ohne dabei die hohe Dichtwirkung der Dichtmittel bei fest montiertem Deckel zu beeinträchtigen.

Wenn der Deckel so ausgebildet ist, daß er zum Verschließen des Filtergehäuses in dieses eingesetzt wird und das Gehäuse den Deckel im montierten Zustand umfaßt, beispielsweise wenn der Deckel ein Außengewinde als Befestigungsmittel aufweist, kann bei einer bevorzugten Ausführungsform des erfindungsgemäßen Deckels sich die Seitenwand des Deckels bis oberhalb des Deckelbodens erstrecken und die Dichtmittel können etwa in Höhe des Deckelbodens oder darüber auf der Außenseite der Seitenwand angeordnet sein. Die gewählte Anordnung ermöglicht dann ein effektives Be- bzw. Entlüften des Deckelinnenraumes, da die Kommunikation zwischen Deckelinnenraum und Umgebung erst nach weitestgehender Entlüftung des Innenraumes unterbrochen wird bzw. schon ein Druckausgleich stattfindet, wenn aufgrund des bis dahin geringen Verstellweges noch kaum Flüssigkeit angesaugt werden konnte.

Entsprechend einer besonders vorteilhaften Weiterbildung dieser Ausführungsform des erfindungsgemäßen Deckels kann auf der Innenseite eines nach außen gewölbten Deckelbodens eine mit der Öffnung kommunizierende Ausnehmung vorgesehen sein, die im mittleren Bereich des Deckelbodens beginnt, etwa radial zur Längsachse des Deckels bzw. des Filtergehäuses, nach außen verläuft und in der Öffnung mündet. Eine solche gewölbte Deckelform wird verwendet, um dem Deckel ausreichende Stabilität zu geben, wenn das Filtergehäuse im Betrieb mit Überdruck beaufschlagt wird. Mit Hilfe der für diese Ausgestaltung vorgeschlagenen Maßnahmen gelingt es, auch diesen durch die Wölbung zusätzlich gebildeten Hohlraum be- bzw. entlüften zu können.

Im Folgenden wird ein Ausführungsbeispiel des erfindungsgemäßen Deckels unter Bezugnahme auf die Zeichnung näher beschrieben.

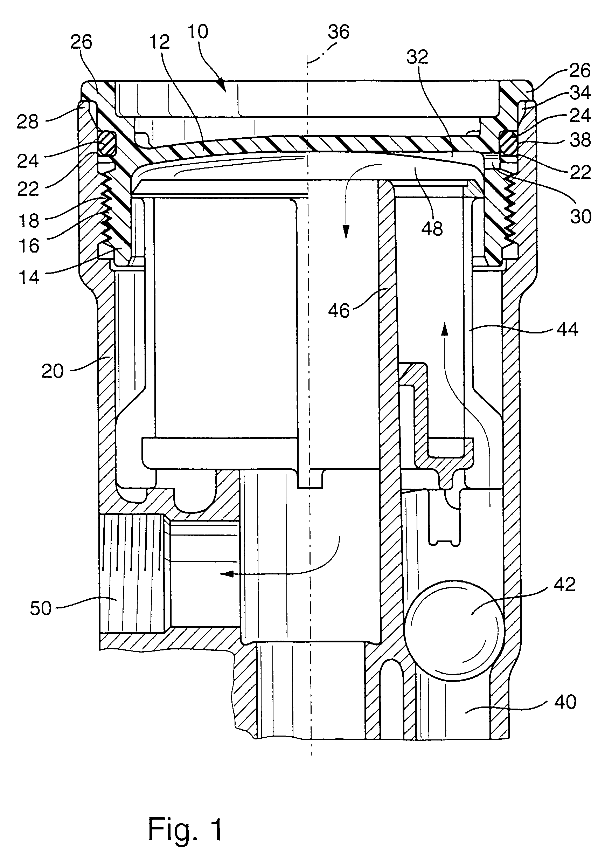

- Fig. 1:: zeigt eine schematische Schnittdarstellung eines Deckels nach der Erfindung, der in ein Filtergehäuse eingeschraubt ist.

Entsprechend Fig. 1 weist ein erfindungsgemäßer Deckel 10 einen Boden 12 und eine entlang seines Umfanges daran angeformte, mantelförmige Seitenwand 14 auf, die sich in Richtung einer Längsachse 36 beiderseits des Bodens 12 erstreckt und dem Deckel 10 die Form eines nach unten offenen Bechers gibt. An ihrem, entsprechend Fig.1, unteren Bereich ist an der Seitenwand 14 ein Außengewinde 16 vorgesehen, das mit einem korrespondierenden Innengewinde 18 eines Filtergehäuses 20 zusammenwirkt und so Befestigungsmittel bildet, mit denen der Deckel 10 im Gehäuse 20 festlegbar ist.

Oberhalb des Außengewindes 16 ist in der Außenseite der Seitenwand 14 eine umlaufende Ringnut 22 ausgespart, in der ein als Dichtmittel dienender O-Ring 24 angeordnet ist. An ihrem oberen Ende ist an die Seitenwand 14 ein radial nach außen vorstehender Absatz 26 angeformt, der im eingeschraubten Zustand des Deckels 10 an einer Stirnseite 28 am offenen Ende des Gehäuses 20 zur Anlage kommt. Auf der Außenseite des Deckels 10 sind nicht gezeigte Mittel zur Betätigung des Deckels 10 angeordnet, z.B. ein angeformter, sich nach oben erstreckender Sechskant, über den mit einem entsprechenden Werkzeug die notwendigen Schraubkräfte einleitbar sind.

An einer Stelle des erfindungsgemäßen Deckels 10, entsprechend Fig. 1 rechts, ist unterhalb der Ringnut 22 eine die Seitenwand 14 radial zur Längsachse 36 durchquerende Öffnung 30 angeordnet, wodurch die Innenseite des becherförmigen Deckels 10 mit seiner Außenseite kommunizierend verbunden ist. Dabei ist die Öffnung 30 im gezeigten Ausführungsbeispiel so dicht unterhalb der Ringnut 22 in die Seitenwand 14 eingebracht, daß die Öffnung 30 unmittelbar in der Ringnut 22 mündet. Die Deckelinnenseite steht somit bis zu einem Ringbereich 38 in kommunizierender Verbindung, in dem sich der O-Ring 24 abdichtend gegen die Innenseite des Filtergehäuses 20 andrückt.

Auf der gegenüberliegenden, dem Gehäuseinnenraum zugewandten Seite mündet die Öffnung 30 in einer an der Innenseite des Deckelbodens 12 vorgesehenen Ausnehmung 32. Während der Deckelboden 12 im Bereich der Ausnehmung 32 eine ebene, in etwa radial zur Längsachse 36 verlaufende Form aufweist, hat er im übrigen Bereich eine nach außen gewölbte, von oben gesehen konvexe Form, die aufgrund der so erzielbaren höheren Druckstabilität gewählt ist. Die Ausnehmung 32 ist dabei so angeordnet, daß sie bei der Längsachse 36, im höchsten Punkt der Wölbung, d.h. im mittleren Bereich des Bodens 12 beginnt und sich von dort aus in etwa horizontal, radial nach außen bis zur Öffnung 30 erstreckt. Auf diese Weise kann die Entlüftung der Deckelinnenseite bis zu ihrem höchsten Punkt im Zentrum der Wölbung erzielt werden.

An der Stirnseite 28 sind entlang ihres Umfanges auf ihrer Innenseite mehrere umfangsmäßig umlaufende Aussparungen 34 vorgesehen, die - im eingeschraubten Zustand des Deckels 10 - unter Einhaltung eines geringen Abstandes vom O-Ring 24 jedoch oberhalb davon beginnen und sich in Richtung der Längsachse 36 bis zum Ende der Stirnseite 28 erstrecken. Wenn der Deckel 10 nun soweit aus seiner Verschlußstellung herausgeschraubt wird, daß sich der gegen die Gehäuseinnenseite abdichtend anliegende Ringbereich 38 des O-Ringes 24 soweit über die Aussparungen 34 verschiebt, daß diese den Ringbereich 38 überbrücken, steht die Innenseite des Deckels 10 mit der Umgebung in kommunizierender Verbindung.

Zu beachten ist dabei, daß im gezeigten Beispiel die Aussparungen 34 nur so tief in die Innenseite des Filtergehäuses 20 eingearbeitet sind, daß sie im eingeschraubten Zustand des Deckels 10 von dem an der Stirnseite 28 aufliegenden Absatz 26 vollständig überdeckt und so beispielsweise vor Verschmutzungen geschützt sind.

Um die Funktionsweise des erfindungsgemäßen Deckels 10 besser erläutern zu können, sind im dargestellten Ausführungsbeispiel einige Filterbauteile im Inneren des Filtergehäuses 20 schematisch wiedergegeben. Die zu filternde Flüssigkeit durchströmt den Filter in Richtung der Pfeile und wird dazu aus einem nicht gezeigten Tank über eine Zuströmleitung 40 dem Filter zugeführt, wobei die Flüssigkeit ein mit einer Kugel 42 symbolisiertes Rückschlagventil durchquert. Die Flüssigkeit gelangt dann entlang der Gehäuseinnenseite zum eigentlichen Filterelement 44, durch dessen Außenseite sie in das Filterelement 44 eindringt.

Das Filterelement 44 ist einerseits an der Innenseite der Seitenwand 14 des Deckels 10 und andererseits an der Außenseite eines sich konzentrisch zur Längsachse 36 im Gehäuse 20 bis unterhalb des eingeschraubten Deckels 10 erstreckenden Rohres 46 abdichtend in radialer Richtung abgestützt. Dabei bildet sich zwischen der Oberseite des Filterelementes 44 und der Unterseite des Deckelbodens 12 ein Innenraum 48 aus, in den die Flüssigkeit eintritt, wenn sie gefiltert aus der Oberseite des Filterelements 44 ausströmt. Die gefilterte Flüssigkeit tritt anschließend durch das Rohr 46 aus dem Innenraum 48 wieder aus und verläßt den Filter durch eine Abströmleitung 50, die die Flüssigkeit einem nicht gezeigten Verbraucher zuführt.

Beim Herausschrauben des Deckels 10 wird das Volumen des Innenraumes 48 vergrößert, der sich dabei ausbildende Unterdruck bewirkt ein Ansaugen weiterer Flüssigkeit aus dem Tank. Je nach Steigung der Gewinde 16, 18 hat sich der O-Ring 24 schon nach wenigen Umdrehungen des Deckels 10 bereits bis über die Aussparungen 34 bewegt, so daß sich die oben beschriebene kommunizierende Verbindung zwischen der Umgebung und der Deckelinnenseite und somit auch mit dem Innenraum 48 aufbauen konnte. Der Innenraum 48 wird dadurch belüftet, die Druckdifferenz ausgeglichen und weiteres Ansaugen von Flüssigkeit aus dem Tank findet nicht mehr statt. Die im Vergleich zu einem herkömmlichen Deckel ohne eine derartige Entlüftungsöffnung angesaugte Flüssigkeitsmenge ist deutlich geringer.

Nach der Wartung des Filters und/oder nach dem Austausch des Filterelements 44 wird beim Aufschrauben des Deckels 10 zunächst die in der nach unten offenen Becherform enthaltene Luft zwischen der Deckelinnenseite und dem Flüssigkeitspegel im Innenraum 48 eingeschlossen. Durch die Öffnung 30 bzw. über die vorgenannte kommunizierende Verbindung zwischen Innenraum 48 und Umgebung kann die im Innenraum 48 eingeschlossene Luft in die Umgebung entweichen. Wenn sich der Flüssigkeitspegel, der sich durch das Herausschrauben des Deckels 10 eingestellt hat, durch die Wartung nicht verringert hat, wird der Innenraum 48 beim Aufschrauben des Deckels 10 sogar vollständig entlüftet. Im Unterschied dazu wird bei herkömmlichen Deckeln ohne diese Entlüftungsöffnung immer der gesamte Rauminhalt der Deckelinnenseite als Luftpolster im Filtergehäuse 20 eingeschlossen.

## Patentansprüche

1. Deckel für ein im wesentlichen aufrecht zu montierendes Gehäuse eines Flüssigkeitsfilters in Form eines nach unten offenen Bechers mit einem Boden und einer damit verbundenen, umlaufenden Seitenwand, die Mittel zur Befestigung des Deckels am Filtergehäuse aufweist und an der oberhalb dieser Befestigungsmittel umlaufende Dichtmittel angeordnet sind,
**dadurch gekennzeichnet**,
daß unterhalb der Dichtmittel (24) wenigstens eine die Seitenwand (14) durchdringende Öffnung (30) vorgesehen ist.

2. Deckel nach Anspruch 1, **dadurch gekennzeichnet**, daß die Öffnung (30) mit einer in der Seitenwand (14) ausgesparten Ringnut (22) kommuniziert, in die ein O-Ring (24) als Dichtmittel eingebracht ist.

3. Deckel nach einem der Ansprüche 1 und 2, **dadurch gekennzeichnet**, daß in einer das offene Ende des Filtergehäuses (20) bildenden Stirnseite (28) wenigstens eine Aussparung (34) vorgesehen ist, die an der Stirnseite (28) beginnt, sich axial zu einer Längsachse (36) des Deckels (10) erstreckt und bei montiertem Deckel (10) oberhalb der Dichtmittel (24) endet.

4. Deckel nach Anspruch 3, **dadurch gekennzeichnet**, daß die Aussparung (34) umfangsmäßig umlaufend ist.

5. Deckel nach einem der vorhergehenden Ansprüche, **dadurch gekennzeichnet**, daß sich die Seitenwand (14) des Deckels (10) bis oberhalb des Deckelbodens (12) erstreckt und daß die Dichtmittel (24) etwa in Höhe des Deckelbodens (12) oder darüber auf der Außenseite der Seitenwand (14) angeordnet sind.

6. Deckel nach einem der vorhergehenden Ansprüche, **dadurch gekennzeichnet**, daß auf der Innenseite eines nach außen gewölbten Deckelbodens (12) eine mit der Öffnung (30) kommunizierende Ausnehmung (32) vorgesehen ist, die im mittleren Bereich des Deckelbodens (12) beginnt, sich etwa radial zur Längsachse (36) nach außen erstreckt und in der Öffnung (30) mündet.

## Claims

1. Cover for a housing, to be assembled substantially upright, of a liquid filter in the form of a cup open at the bottom with a base and a peripheral side wall connected to it, which has means for fastening the cover to the filter housing and on which peripheral sealing means are arranged above these fastening means, characterised in that beneath the sealing means (24) there is provided at least one aperture (30) traversing the side wall (14).

2. Cover according to claim 1, characterised in that the aperture (30) communicates with an annular groove (22) recessed in the side wall (14), an O-ring (24) being inserted into the annular groove (22) as sealing means.

3. Cover according to one of claims 1 and 2, characterised in that in an end face (28) forming the open end of the filter housing (20), there is provided at least one recess (34) starting at the end face (28), extending axially to a longitudinal axis (36) of the cover (10) and ending above the sealing means (24) when the cover (10) is assembled.

4. Cover according to claim 3, characterised in that the recess (34) runs circumferentially.

5. Cover according to one of the preceding claims, characterised in that the side wall (14) of the cover (10) extends to above the base of the cover (12) and in that the sealing means (24) are arranged approximately at the height of the cover base (12) or above on the exterior of the side wall (14).

6. Cover according to one of the preceding claims, characterised in that on the interior of an outwardly domed cover base (12), there is provided a recess (32) which communicates with the aperture (30) and which begins in the central region of the cover base (12) and extends outwardly approximately radially to the longitudinal axis (36) and opens in the aperture (30).

## Revendications

1. Couvercle pour un boîtier, à monter essentiellement à la verticale, d'un filtre pour liquide, en forme d'un godet ouvert vers le bas avec un fond et une paroi latérale circulaire, assemblée avec ce dernier, qui présente des moyens pour la fixation du couvercle sur le boîtier filtrant et sur laquelle sont disposés des moyens d'étanchéité circulaires au-dessus de ces moyens de fixation, caractérisé en ce qu'au moins une ouverture (30), traversant la paroi latérale (14), est prévue au-dessous des moyens d'étanchéité (24).

2. Couvercle suivant la revendication 1, caractérisé en ce que l'ouverture (30) communique avec une rainure annulaire (22), ménagée dans la paroi latérale (14) et dans laquelle est placé un joint torique (24) comme moyen d'étanchéité.

3. Couvercle suivant l'une des revendications 1 et 2, caractérisé en ce qu'au moins un évidement (34) est prévu dans un côté frontal (28) formant l'extrémité ouverte du boîtier filtrant (20), cet évidement commençant sur le côté frontal (28), s'étendant dans le sens axial par rapport à un axe longitudinal (36) du couvercle (10), et s'achevant au-dessus des moyens d'étanchéité (24) à l'état de montage du couvercle (10).

4. Couvercle suivant la revendication 3, caractérisé en ce que l'évidement (34) est circulaire sur le pourtour.

5. Couvercle suivant l'une des revendications précédentes, caractérisé en ce que la paroi latérale (14) du couvercle (10) s'étend jusqu'au dessus du fond de couvercle (12), et en ce que les moyens d'étanchéité (24) sont disposés à peu près au niveau du fond de couvercle (12) ou au-dessus sur le côté externe de la paroi latérale (14).

6. Couvercle suivant l'une des revendications précédentes, caractérisé en ce qu'un creux (32), communicant avec l'ouverture (30), est prévu sur le côté interne d'un fond de couvercle (12) cintré vers l'extérieur, ce creux commençant dans la zone centrale du fond de couvercle (12), s'étendant vers l'extérieur à peu près dans le sens radial par rapport à l'axe longitudinal (36), et débouchant dans l'ouverture (30).
